(19) Europäisches Patentamt / European Patent Office / Office européen des brevets

(11) **EP 0 885 639 B1**

(12) **FASCICULE DE BREVET EUROPEEN**

(45) Date de publication et mention
de la délivrance du brevet:
**18.04.2007 Bulletin 2007/16**

(51) Int Cl.:
**_B01D 3/06_** _(2006.01)_

(21) Numéro de dépôt: **98460025.4**

(22) Date de dépôt: **18.06.1998**

(54) **"Procédé de régulation de l'apport en gaz oxygéné dans un biofiltre à courants ascendants et installation pour la mise en oeuvre d'un telprocédé"**

Verfahren zur Regelung der Zufuhr von sauerstoffhaltigem Gas in einen Biofilter mit aufsteigender Strömung und Anlage zur Durchführung eines solchen Verfahrens

Process for regulating the charge of an oxygen containing gas into a biofilter with rising flow and plant for carrying out the method

(84) Etats contractants désignés:
**AT BE CH DE DK ES FI GB IE IT LI NL PT SE**

(30) Priorité: **19.06.1997 FR 9707885**

(43) Date de publication de la demande:
**23.12.1998 Bulletin 1998/52**

(73) Titulaire: **OTV SA**
**94417 Saint-Maurice Cedex (FR)**

(72) Inventeurs:
• **Payraudeau, Michèle**
**95600 Eaubonne (FR)**

• **Gisclon, Arnaud**
**78300 Poissy (FR)**

(74) Mandataire: **Vidon, Patrice et al**
**Cabinet Vidon**
**16 B, rue Jouanet - B.P. 90333**
**Technopole Atalante**
**35703 Rennes Cedex 7 (FR)**

(56) Documents cités:
**EP-A- 0 265 303      EP-A- 0 630 860**
**DE-A- 3 019 698**

## Description

L'invention concerne le domaine du traitement de l'eau et se rapporte à un procédé permettant de réguler l'apport en gaz oxygéné dans un filtre biologique (biofiltre).

Plus précisément, l'invention se rapporte à un tel procédé pouvant être mis en oeuvre dans un filtre du type comprenant :

- des moyens d'amenée d'une eau à filtrer prévus dans la partie inférieure du filtre,
- un lit filtrant (généralement constitué d'au moins une couche d'un matériau de filtration granulaire de densité inférieure ou supérieure à celle de l'eau, mais pouvant aussi être constitué par un garnissage fixe structuré) servant de support à une biomasse utilisée pour dégrader la pollution carbonée et/ou azotée de l'eau à filtrer,
- des moyens de distribution d'un gaz oxygéné (classiquement de l'air) dans au moins une partie dudit lit filtrant,
- une zone de réserve prévue au-dessus dudit lit filtrant permettant la constitution d'une tranche d'eau au-dessus de celui-ci, et
- des moyens d'évacuation des eaux filtrées ayant transité à l'intérieur du filtre selon un courant ascendant, prévus dans la partie supérieure du filtre.

Les filtres de ce type sont bien connus de l'état de la technique et notamment décrits dans le brevet européen EP - 265303 au nom de la Déposante. Ils présentent de nombreux avantages au rang desquels on peut citer la possibilité de traiter différents types de pollution (carbonée et/ou azotée) dans un volume de traitement restreint et leur capacité élevée de traitement. La zone de réserve dont ils sont pourvus peut de plus être avantageusement utilisée pour mettre en oeuvre une distribution efficace d'eau propre à contre-courant du courant de traitement permettant de laver rapidement le lit filtrant (rétro-lavage).

L'invention trouve tout particulièrement son application dans le domaine de l'épuration biologique des eaux usées.

Comme précisé ci-dessus, les filtres biologiques du type décrit ci-dessus auxquels se rapporte l'invention peuvent être utilisés notamment pour dégrader biologiquement la pollution carbonée et/ou la pollution azotée contenues dans les eaux à filtrer.

En ce qui concerne le traitement de la pollution carbonée, la biomasse utilisée est une biomasse majoritairement hétérotrophe qui dégrade en présence d'oxygène l'essentiel des composés organiques carbonés. Il est donc intéressant de distribuer dans ce but le gaz oxygéné dans la plus grande partie du lit filtrant.

En ce qui concerne le traitement de la pollution azotée, ce type de filtre est utilisé en ne distribuant le gaz oxygéné que dans une partie du lit filtrant de façon à y ménager une zone aérobie supérieure et une zone anoxique inférieure, tout en prévoyant un recyclage d'une partie de l'eau filtrée. La pollution ammoniacale contenue dans les eaux à filtrer est ainsi dégradée en nitrates par une biomasse majoritairement autotrophe dans la zone aérobie (étape de nitrification), ces nitrates étant quant à eux dégradés en azote gazeux par une biomasse majoritairement hétérotrophe consommant, en l'absence d'oxygène moléculaire, l'oxygène des nitrates dans la zone anoxique inférieure du filtre (étape de dénitrification).

Il est également possible d'utiliser ce type de filtre en nitrification tertiaire, en utilisant une biomasse majoritairement autotrophe et en distribuant le gaz oxygéné dans la totalité du lit filtrant.

Afin de pouvoir adapter les filtres de ce type à ces différentes configurations, il est connu de les munir d'une part de premiers moyens de distribution d'un gaz oxygéné prévus dans leur partie inférieure permettant de distribuer le gaz oxygéné dans la totalité du lit filtrant et d'autre part, de seconds moyens de distribution d'un gaz oxygéné prévus dans la partie médiane du filtre, permettant de ne distribuer ce gaz oxygéné que dans la zone supérieure de ce lit filtrant.

Quelque soit la configuration utilisée, l'un des problèmes suscités par l'utilisation de ce type de filtre biologique est constitué par la difficulté à distribuer le gaz oxygéné nécessaire aux processus biologiques en répondant au compromis consistant à :

- assurer une distribution suffisante de ce gaz oxygéné à l'intérieur du lit filtrant afin d'autoriser la biomasse à remplir pleinement sa fonction ;
- tout en économisant le gaz oxygéné distribué.

On sait en effet que la quantité de gaz oxygéné distribué entre pour une part importante dans les coûts de fonctionnement de tels biofiltres. L'une des préoccupations importantes de l'homme de l'art est donc de trouver des solutions techniques permettant de répondre au compromis cité ci-dessus.

Pour tendre vers ce but, il est connu de moduler l'apport en gaz oxygéné de façon empirique, en fonction des variations habituelles moyennes de la charge polluante et du débit d'eau à traiter. Un telle méthode présente l'inconvénient de ne proposer qu'une adaptation très grossière des débits de gaz oxygéné distribué aux besoins effectifs de la biomasse et implique donc tant le risque d'un apport excessif en gaz que celui d'un apport trop faible.

Il est également connu d'estimer la quantité théorique $Q_{O2}$ d'oxygène nécessaire à la biomasse présente dans le filtre en utilisant une formule du type :

$$Q_{02} = 4,57\ Q'_{N\text{-}NH3} + \alpha\ Q'_{DCOs} + \beta\ Q_{DCOp}$$

dans laquelle $Q'_{N\text{-}NH3}$ est la quantité de pollution ammoniacale éliminée, $Q'_{DCOs}$ est la quantité de pollution carbonée soluble éliminée et $Q_{DCOp}$ est la quantité de pollution carbonée particulaire appliquée, ($Q_{O2}$, $Q'_{N\text{-}NH3}$, $Q'_{DCOs}$ et $Q_{DCOp}$ étant exprimés en kilogrammes, $\alpha$ et $\beta$ étant des constantes connues de l'homme de l'art) et d' adapter le débit de gaz oxygéné distribué en fonction de $Q_{O2}$.

Toutefois, l'application d'une telle formule implique la nécessité d'utiliser des appareillages sophistiqués pour mesurer la concentration représentative de la quantité de pollution entrant dans le filtre et sortant du biofiltre. Ces appareillages présentent l'inconvénient d'être chers. Une telle méthode ne peut également pas être mise en oeuvre avec une fréquence suffisante pour permettre une adéquation continue ou quasi-continue des débits d'air aux besoins de la biomasse. De plus, elle implique des temps de réponse longs.

On notera par ailleurs qu'il était parfaitement connu de mesurer la concentration en oxygène dissous de l'eau filtrée par un dispositif de filtration biologique et, en fonction du résultat obtenu, d'adapter la quantité d'air distribué dans ce dispositif de filtration. Toutefois, une telle technique est très approximative car elle ne prend aucunement en compte le transfert d'oxygène de la phase gazeuse vers la phase aqueuse qui se produit au cours de la filtration et ne propose donc qu'une solution imparfaite au compromis cité ci-dessus.

L'objectif principal de la présente invention est de fournir une solution technique permettant de répondre au compromis cité ci-dessus et ne présentant pas les inconvénients de l'état de la technique.

Notamment, un objectif de l'invention est de décrire un tel procédé qui permette d'adapter en continu ou en semi-continu les débits de gaz oxygéné distribué dans le biofiltre aux besoins de la biomasse et juste à ces besoins, de façon à économiser ce gaz.

Ces différents objectifs sont atteints grâce à l'invention qui concerne un procédé de régulation de l'aération dans un filtre biologique du type comprenant :

- des moyens d'amenée d'une eau à filtrer prévus dans la partie inférieure du filtre,
- un lit filtrant servant de support à une biomasse utilisée pour dégrader la pollution carbonée et/ou azotée de l'eau à filtrer,
- des moyens de distribution d'un gaz oxygéné dans au moins une partie dudit lit filtrant,
- une tranche d'eau filtrée prévue au-dessus dudit lit filtrant, et,
- des moyens d'évacuation des eaux filtrées ayant transité à l'intérieur du filtre selon un courant ascendant, prévus dans la partie supérieure du filtre,

caractérisé en ce qu'il consiste à prendre en compte le rendement d'utilisation Ct de l'oxygène distribué par la biomasse pour réguler le débit dudit gaz oxygéné distribué et/ou sa concentration en oxygène moléculaire, de façon à optimiser la quantité d'oxygène moléculaire distribué par lesdits moyens de distribution.

L'invention propose donc de réguler la quantité d'oxygène distribué dans le biofiltre en prenant en compte le rendement d'utilisation de l'oxygène de la biomasse, et non plus simplement la seule concentration en oxygène de l'eau sortant du biofiltre.

L'homme de l'art savait déjà que l'ensemble de l'oxygène apporté par les moyens de distribution de gaz oxygéné dans un biofiltre n'est pas directement disponible et qu'il existe un transfert d'oxygène de la phase gaz vers la biomasse. Toutefois, il était de pratique courante jusqu'alors de considérer que le rendement de ce transfert ("ou" "rendement d'utilisation d'oxygène par la biomasse") dépendait à la fois des conditions de fonctionnement (vitesse en eau et en air) mais aussi des caractéristiques du filtre (système d'aération, hauteur du lit filtrant, etc...) Or, la Déposante a établi que la mesure seulement de la concentration en oxygène dissous de l'eau en sortie de lit filtrant et de la température de l'eau traitée suffisait à établir le rendement d'utilisation de l'oxygène.

Selon une variante préférentielle de l'invention, le procédé comprend les étapes consistant à:

- mesurer dans ladite tranche d'eau la concentration en oxygène dissous ($O_2$) de l'eau filtrée ;
- mesurer la température T de l'eau filtrée ;
- calculer le rendement $C_T$ d'utilisation de l'oxygène par ladite biomasse en fonction de la température T mesurée et de la concentration en oxygène dissous ($O_2$) mesurée;
- réguler le débit de gaz oxygéné distribué par lesdits moyens de distribution en fonction dudit rendement d'utilisation

$C_T$ calculé.

Plus précisément, le procédé comprend ainsi les étapes consistant à :

- fixer un débit de gaz oxygéné de référence $Q_{gaz\,t}$ à un temps t donné ;
- fixer un rendement de référence $C_{Tref}$ d'utilisation de l'oxygène par la biomasse ;
- mesurer à un temps $t_i$ la température T de l'eau filtrée ;
- mesurer audit temps $t_i$ la concentration en oxygène dissous ($O_2$) dans ladite tranche d'eau filtrée;
- calculer ledit rendement $C_T$ d'utilisation de l'oxygène par la biomasse ;
- calculer le débit de gaz oxygéné $Q_{gazti}$ nécessaire au temps $t_i$.
- réguler le débit et/ou la concentration dudit gaz oxygéné distribué par lesdits moyens de distribution en fonction du résultat obtenu.

Dans le cadre du procédé de l'invention, la concentration en oxygène dissous et la température sont mesurées pour déterminer régulièrement le rendement d'utilisation, l'apport en gaz oxygéné étant régulé pour un fonctionnement préférentiel au rendement de référence.

En pratique, il conviendra de mesurer la concentration en oxygène dissous à une hauteur H au moins égale à la hauteur Hmin suffisante pour permettre la dissolution de l'essentiel de l'oxygène gazeux sortant dudit lit filtrant sous forme de bulles. Préférentiellement, cette hauteur H sera supérieure à cette hauteur $H_{min}$ et pourra varier en fonction de la structure du filtre. Une telle variante permettra de s'assurer que la concentration maximale d'oxygène dissous est mesurée. $H_{min}$ variera en fonction de nombreux paramètres (débit entrant du gaz oxygéné, nature du lit filtrant, hauteur du lit filtrant, etc...). ,

la température de l'eau traitée est également mesurée dans ladite tranche d'eau. On pourra toutefois envisager de mesurer cette température en un autre endroit du biofiltre.

Egalement préférentiellement, ledit gaz oxygéné est de l'air et ledit rendement $C_T$ d'utilisation de l'oxygène par la biomasse est calculé en appliquant la formule :

$$C_T = [475 - O_2\,(33,5 + T\,)] / [475 - 0,21 O_2 \times (33,5 + T)]$$

dans laquelle T est la température de l'eau filtrée exprimée en °C et $O_2$ est la concentration en oxygène dissous de l'eau traitée exprimée en mg/l. Toutefois, l'homme de l'art pourra envisager d'autres formules pour la mise en oeuvre du procédé selon l'invention, notamment lorsqu'exceptionnellement, le gaz oxygéné sera un autre gaz que l'air, par exemple de l'air enrichi en oxygène ou de l'oxygène pur.

Egalement selon une variante selon l'invention, le procédé est effectué en semi-continu et consiste à mesurer les quantités d'oxygène dissous à différents temps à calculer la moyenne $O_{2\,moy}$ des quantités d'oxygène dissous mesurées, à mesurer les températures de l'eau traitée aux différents temps $t_i$, $t_{i+1}$, $t_{i+2}$, ..., $t_n$ à calculer la moyenne $T_{moy}$ des températures mesurées et à calculer ledit rendement $C_T$ d'utilisation de l'oxygène par la biomasse à partir de $O_{2moy}$ et $T_{moy}$.

Selon une autre variante, le procédé est mis en oeuvre en continu.

L'invention concerne également un filtre biologique pour le traitement de l'eau du type décrit ci-dessus, caractérisé en ce qu'il comprend des moyens de mesure de la concentration en oxygène dissous dans ladite tranche d'eau, et en ce qu'il comprend des moyens de mesure de la température de l'eau filtrée.

Avantageusement, ces moyens de mesure sont constitués par au moins un capteur installé dans ladite tranche d'eau à une hauteur H de la surface supérieure dudit lit filtrant, ladite hauteur H étant supérieure à la hauteur Hmin, suffisante pour permettre la dissolution de l'oxygène gazeux sortant dudit lit filtrant sous forme de bulles jusqu'à l'équilibre.

L'invention, ainsi que les différents avantages qu'elle présente, seront plus facilement compris grâce à la description qui va suivre d'un mode non limitatif de réalisation de celle-ci en référence aux dessins, dans lesquels :

- la figure 1 représente une vue schématique d'un filtre biologique pour la mise en oeuvre du procédé selon l'invention ;
- la figure 2 représente un organigramme reprenant les différentes étapes d'une variante préférentielle du procédé selon l'invention ;
- la figure 3 représente un graphe montrant l'évolution dans le temps de la concentration en oxygène dissous à la sortie du filtre à débit d'eau constant et en fonction de différents débits d'air ;
- la figure 4 représente un graphe montrant l'évolution dans le temps du rendement d'utilisation CT en fonction des variations de la charge polluante ammoniacale entrant dans le biofiltre et de la charge polluante ammoniacale sortant du biofiltre; et,

- la figure 5 représente un graphe montrant la régulation des débits d'air observés en mettant en oeuvre le procédé selon l'invention.

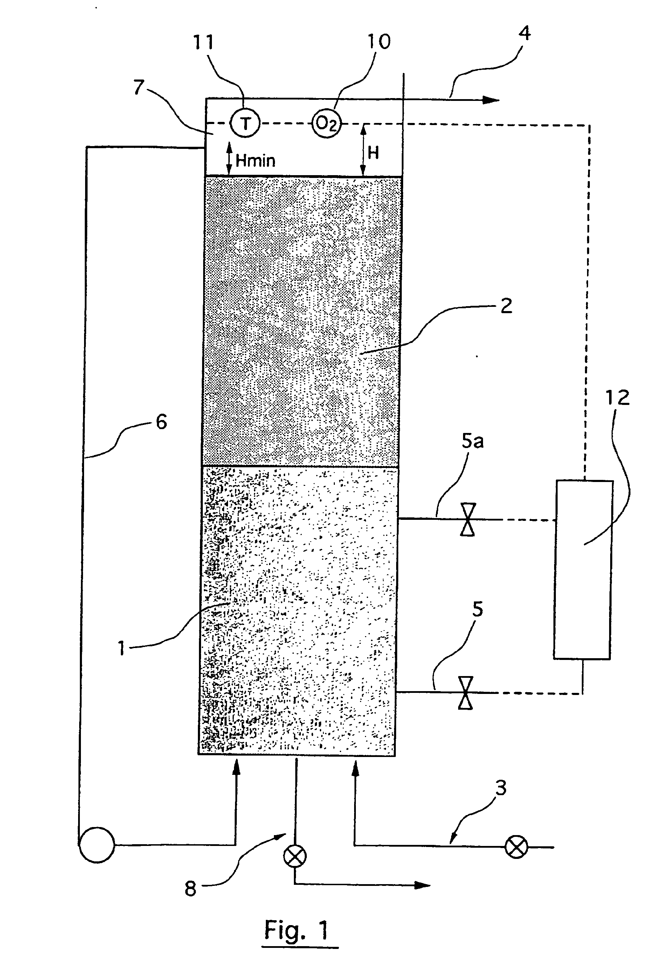

Le filtre biologique représenté à la figure 1 inclut un réacteur 1 pourvu d'un lit filtrant de matériau granulaire 2 servant de support à une biomasse, de moyens d'amenée 3 d'une eau à traiter prévus dans la partie inférieure du réacteur, et de moyens d'évacuation 4 de l'eau traitée après qu'elle ait transité de façon ascendante au sein du lit de filtrant 2, prévus dans la partie supérieure du réacteur. De façon classique, une rampe d'aération 5 est prévue dans la partie inférieure du filtre et une rampe 5a est prévue dans sa partie intermédiaire afin de pouvoir définir, en cas de besoin, une zone de filtration aérée supérieure et une zone de filtration anoxique inférieure. Egalement classiquement une boucle de recirculation 6 des eaux filtrées est également prévue. Le réacteur présente dans sa partie supérieure, une zone 7 prévue au-dessus du lit filtrant et permettant de constituer une réserve d'eau traitée et est par ailleurs pourvu de moyens de purge 8 prévus dans la partie inférieure du filtre.

Conformément à la présente invention, le réacteur est pourvu de moyens de mesure de l'oxygène dissous incluant un capteur 10 installé dans ladite zone de réserve à une hauteur H (dans la cadre du présent mode de réalisation égale à 50 cm) de la surface supérieure du lit filtrant 2. Cette hauteur H est supérieure à la hauteur $H_{min}$ (dans le cadre du présent mode de réalisation égale à environ 40 cm) nécessaire à la bonne dissolution de l'oxygène gazeux présent dans les bulles d'air appauvries en oxygène sortant de celui-ci.

Egalement conformément à l'invention, le réacteur est pourvu d'un capteur 11 de la température (T) de l'eau filtrée sortant du lit filtrant 2, ce capteur étant également installé dans la zone de réserve d'eau propre 7.

Les capteurs 11 et 10 sont reliés à une unité de calcul et de régulation 12 permettant d'agir sur l'alimentation des rampes d'aération 5 et/ou 5a afin de réguler les débits d'air distribué en fonction des données transmises par ceux-ci.

Lors de la mise en oeuvre du procédé selon l'invention, les données de référence suivantes sont entrées au temps t dans l'unité de calcul et de régulation 12:

- débit d'air initial Qt ;
- rendement d'utilisation de référence $C_{Tref}$ choisi en fonction de la charge polluante initiale de l'eau à filtrer.

Au cours de la filtration, la concentration en oxygène dissous ($O_2$) en [ml/g] et la température (T) en [°C] de l'eau filtrée présente dans la zone de réserve sont acquises à intervalle de temps régulier. L'unité 12 calcule ensuite le rendement $C_T$ d'utilisation de l'oxygène apporté par la biomasse grâce à la formule :

$$C_T = [475 - O_2 (33,5 + T)] / [475 - 0,21 O_2 \times (33,5 + T)]$$

puis le débit d'air correspondant $Q_{t+1}$ nécessaire pour maintenir le rendement d'utilisation effectif égal ou proche du rendement d'utilisation de référence $C_{Tref}$ grâce à la formule :

$$Q_{t+1} = (Q_t \times C_T) / C_{Tref}$$

Si le rendement $C_T$ calculé est égal ou à peu près égal à $C_{Tref}$, le débit d'air apporté par les rampes 5 et/ou 5a n'est pas modifié. S'il est différent, l'unité 12 agit sur les moyens d'alimentation de ces rampes, soit pour diminuer, soit pour augmenter les débits d'air distribué.

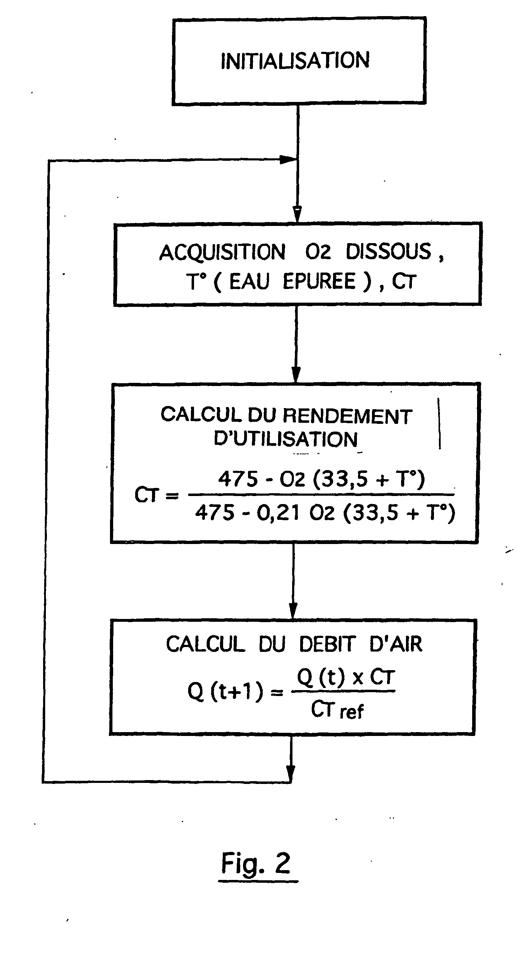

Le fonctionnement décrit ci-dessus est résumé dans l'organigramme représenté à la figure 2.

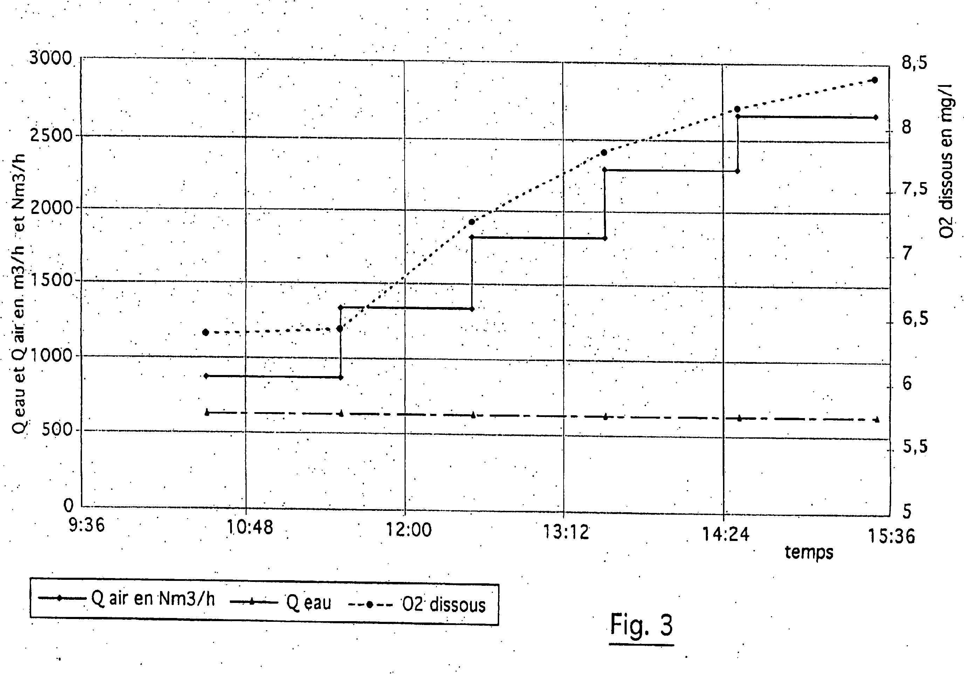

La figure 3 représente, pour un débit d'eau constant de 650 $m^3$/H correspondant à une charge polluante essentiellement constante, l'évolution de la quantité d'oxygène dissous mesurée selon l'invention à la sortie du lit filtrant dans le zone de réserve 7 en fonction de différents débits d'air apportés à la biomasse variant de 900 $Nm^3$/H à 2600 $Nm^3$/H. Ce graphe montre clairement qu'à partir d'un certain débit d'air, la concentration d'oxygène dissous de l'eau filtrée est de plus en plus importante traduisant une non utilisation par la biomasse d'une fraction croissante de l'oxygène disponible dans l'air apporté.

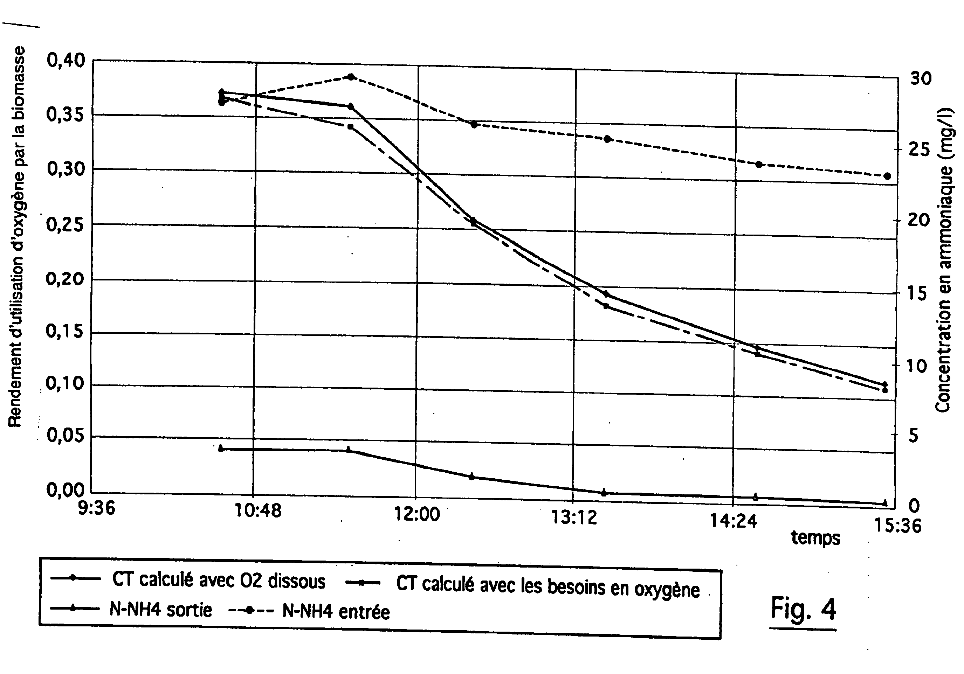

La figure 4 représente l'évolution dans le temps du rendement d'utilisation $C_T$ en fonction des variations de la charge polluante ammoniacale entrant dans le biofiltre et de la charge polluante ammoniacale sortant du biofiltre. Ce graphe permet de constater qu'un rendement d'utilisation de la biomasse $C_T$ de 0,30, correspondant à un faible apport d'air, permet d'obtenir un aussi bon abattement de la pollution qu'un rendement de 0,10 correspondant à un fort apport d'air. Ce graphe permet également de constater que les besoins de la biomasse (calculés selon la formule $Q_{O_2} = 4,57 Q'_{N-NH_3} + \alpha Q'_{DCO} + \beta Q_{DCO}$ citée ci-dessus) correspondent sensiblement aux valeurs de $C_T$ mesurée, ce qui confirme la fiabilité de ce paramètre.

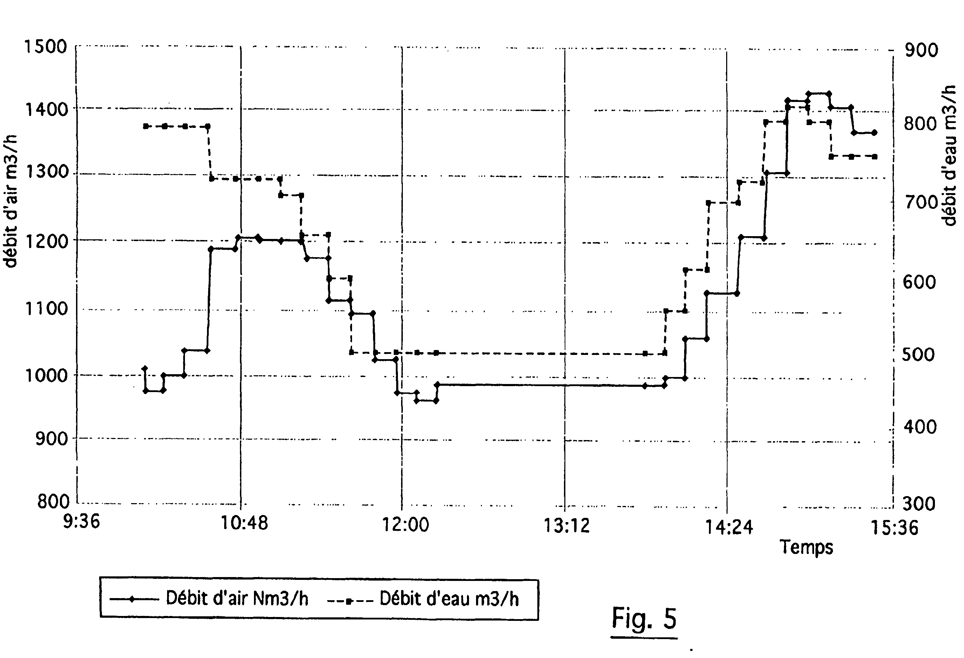

Les résultats obtenus dans le présent exemple de réalisation sont synthétisés dans le tableau I et en figure 5 qui montre la régulation dans le temps du débit d'air distribué dans le filtre en fonction du débit d'eau observé à l'entrée du filtre pour un rendement de référence $C_{Tref}$ de 0,2. Les courbes portées sur cette figure montrent une adaptation de la quantité d'air distribué en fonction du débit d'eau. On notera que sur ce graphe, les huit premières mesures effectuées concernent la période de mise en route du filtre après un lavage au cours de laquelle le débit d'eau est fort et l'apport en air faible. Ceci provient de l'évacuation progressive de l'eau de lavage propre présente dans le filtre impliquant une concentration en polluants faible et conséquemment un besoin en oxygène de la biomasse plus faible.

<u>Tableau I</u>

| Heure | CT calculé en fonction de T et $O_2$ | Qgaz Nm3/h | Qeau m3/h |
|---|---|---|---|
| 10:06 | 0,1890 | 1008 | |
| 10:16 | 0,2138 | 969 | 790 |
| 10:26 | 0,2190 | 1000 | 790 |
| 10:36 | 0,2082 | 1041 | 790 |
| 10:46 | 0,2024 | 1190 | 720 |
| 10:56 | 0,2001 | 1204 | 720 |
| 11:06 | 0,1997 | 1199 | 720 |
| 11:16 | 0,1964 | 1200 | 690 |
| 11:26 | 0,1902 | 1170 | 650 |
| 11:36 | 0,1963 | 1117 | 600 |
| 11:46 | 0,1875 | 1095 | 500 |
| 11:56 | 0,1884 | 1025 | 500 |
| 12:06 | 0,1969 | 974 | 500 |
| 12:16 | 0,1991 | 965 | 500 |
| 13:46 | 0,1985 | 987 | 500 |
| 13:56 | 0,2032 | 984 | 500 |
| 14:06 | 0,2111 | 1000 | 560 |
| 14:16 | 0,2153 | 1060 | 620 |
| 14:26 | 0,2154 | 1127 | 690 |
| 14:36 | 0,2164 | 1208 | 720 |
| 14:46 | 0,2169 | 1305 | 790 |
| 14:56 | 0,2022 | 1418 | 820 |
| 15:06 | 0,1959 | 1430 | 790 |
| 15:16 | 0,1960 | 1405 | 750 |
| 15:26 | 0,2004 | 1365 | 750 |

Le mode de réalisation de l'invention ici décrit n'a pas pour objet de réduire la portée de l'invention. Il pourra donc y être apporté de nombreuses modifications sans sortir du cadre de celle-ci.

**Revendications**

1. Procédé de régulation de l'apport en gaz oxygéné dans un filtre biologique du type comprenant:

   - des moyens d'amenée (3) d'une eau à filtrer prévus dans la partie inférieure du filtre,
   - un lit filtrant (2) servant de support à une biomasse utilisée pour dégrader la pollution carbonée et/ou azotée de l'eau à filtrer,
   - des moyens de distribution d'un gaz oxygéné (5,5a) dans au moins une partie dudit lit filtrant (2),
   - une tranche d'eau filtrée (7) prévue au-dessus dudit lit filtrant (2), et,
   - des moyens d'évacuation (4) des eaux filtrées ayant transité à l'intérieur du filtre selon un courant ascendant, prévus dans la partie supérieure du filtre,

   **caractérisé en ce qu'**il consiste à calculer le rendement d'utilisation Ct de l'oxygène par la biomasse en fonction des seules mesures de la température et de la concentration en oxygène dissous dans la tranche d'eau filtrée (7) et à réguler le débit et/ou la concentration de gaz oxygéné en fonction du rendement Ct calculé.

2. Procédé selon la revendication 1 **caractérisé en ce qu'**il comprend les étapes consistant à:

   - mesurer dans ladite tranche d'eau (7) la concentration en oxygène dissous ($O_2$) de l'eau filtrée ;
   - mesurer la température T de l'eau filtrée ;
   - calculer le rendement $C_T$ d'utilisation de l'oxygène par ladite biomasse en fonction de la température T mesurée et de la concentration en oxygène dissous ($O_2$) mesurée;
   - réguler le débit de gaz oxygéné distribué par lesdits moyens de distribution en fonction dudit rendement d'utilisation $C_T$ calculé.

3. Procédé selon la revendication 2 **caractérisé en ce qu'**il comprend les étapes consistant à:

   - fixer un débit de gaz oxygéné de référence $Q_{gaz}$ à un temps $t_i$ donné;
   - fixer un rendement de référence $C_{Tref}$ d'utilisation de l'oxygène par la biomasse ;
   - mesurer à un temps $t_n$ la température T de l'eau filtrée ;
   - mesurer audit temps $t_n$ la concentration en oxygène dissous ($O_2$) dans ladite tranche d'eau filtrée;
   - calculer ledit rendement $C_T$ d'utilisation de l'oxygène par la biomasse ;
   - calculer le débit de gaz oxygéné $Q_{gaz}$ ($t_n$) nécessaire au temps $t_n$;
   - réguler le débit et/ou la concentration dudit gaz oxygéné distribué par lesdits moyens de distribution en fonction du résultat obtenu.

4. Procédé selon la revendication 1, **caractérisé en ce qu'**il comprend les étapes consistant à:

   - mesurer la température T de l'eau traitée ;
   - fixer une concentration en oxygène dissous de référence correspondant à une température mesurée et à un rendement d'utilisation de référence $C_{Tref}$;
   - mesurer la concentration en oxygène dissous ($O_2$) de l'eau traitée ;
   - réguler le débit et/ou la concentration de gaz oxygéné distribué par lesdits moyens de distribution afin que la concentration en oxygène dissous mesurée corresponde à la concentration en oxygène dissous de référence.

5. Procédé selon l'une quelconque des revendications 1 à 4 **caractérisé en ce que** la concentration en oxygène dissous ($O_2$) est mesurée dans ladite tranche d'eau (7) au moins à une hauteur H de la surface supérieure dudit lit filtrant suffisante pour permettre la dissolution de l'oxygène gazeux sortant dudit lit filtrant jusqu'à l'équilibre.

6. Procédé selon l'une des revendications 1 à 5 **caractérisé en ce que** la température de l'eau traitée est également mesurée dans ladite tranche d'eau (7).

7. Procédé selon l'une quelconque des revendications 1 à 6 **caractérisé en ce que** ledit gaz oxygéné est de l'air et **en ce que** ledit rendement $C_T$ d'utilisation de l'oxygène par la biomasse est calculé en appliquant la formule :

$$C_T = [475 - O_2 (33,5 + T)]/ [475 - 0,21 O_2 \times (33,5 + T)]$$

dans laquelle T est la température de l'eau filtrée exprimée en °C et $O_2$ est la concentration en oxygène dissous de l'eau traitée exprimée en mg/l.

8. Procédé selon l'une des revendications 1 à 7 **caractérisé en ce qu'**il consiste à mesurer les quantités d'oxygène dissous à différents temps $t_i$, $t_{i+1}$ $t_{i+2}$, ...$t_n$, à calculer la moyenne $O_{2\ moy}$ des quantités d'oxygène dissous mesurées, à mesurer les températures de l'eau traitée aux différents temps $t_i$, $t_{i+1}$, $t_{i+2}$, ... $t_n$ à calculer la moyenne $T_{moy}$ des températures mesurées et à calculer ledit rendement $C_T$ d'utilisation de l'oxygène par la biomasse à partir de $O_{2moy}$ et $T_{moy}$.

9. Procédé selon l'une des revendications 1 à 7 **caractérisé en ce qu'**il est mis en oeuvre en continu.

10. Filtre biologique pour le traitement de l'eau spécialement conçu pour la mise en oeuvre du procédé selon l'une des revendications 1 à 9 comprenant:

- des moyens d'amenée (5) d'une eau à filtrer prévus dans la partie inférieure du filtre,
- un lit filtrant (2) servant de support à une biomasse utilisée pour dégrader la pollution carbonée et/ou azotée de l'eau à filtrer,
- des moyens de distribution d'un gaz oxygéné (5,5a) dans au moins une partie dudit lit filtrant (2),
- une tranche (7) d'eau filtrée prévue au-dessus dudit lit filtrant (2), et,
- des moyens d'évacuation (4) des eaux filtrées ayant transité à l'intérieur du filtre selon un courant ascendant prévus dans la partie supérieure du filtre,

**caractérisé en ce qu'**il comprend des moyens de mesure (10) de la concentration en oxygène dissous dans ladite tranche d'eau (7), et **en ce qu'**il comprend des moyens de mesure de la température de l'eau filtrée (11).

11. Filtre selon la revendication 10 **caractérisé en ce que** lesdits moyens de mesure de la concentration en oxygène dissous sont constitués par au moins un capteur (10) installé dans ladite tranche d'eau (7) à une hauteur H de la surface supérieure dudit lit filtrant, ladite hauteur H étant supérieure à la hauteur Hmin, suffisante pour permettre la dissolution de l'oxygène gazeux sortant dudit lit filtrant sous forme de bulles jusqu'à l'équilibre.

**Claims**

1. Process for regulating the supply of oxygenated gas to a biological filter of the type comprising:

   - means (3) for feeding water to be filtered, provided in the lower part of the filter,
   - a filter bed (2) serving to support a biomass used to degrade the carbonaceous and/or nitrogenous pollution in the water to be filtered,
   - means (5, 5a) for distributing an oxygenated gas to at least one part of the said filter bed (2),
   - a layer of filtered water (7) provided above the said filter bed (2), and
   - means (4) for removing filtered water that has flowed through the interior of the filter in an ascending current, provided in the upper part of the filter,

   **characterised in that** the process consists in calculating the utilisation efficiency Ct of the oxygen by the biomass as a function of measurements of the temperature and concentration of dissolved oxygen in the layer of filtered water (7) and in regulating the flow rate and/or the concentration of oxygenated gas depending on the calculated utilisation efficiency Ct.

2. Process according to claim 1, **characterised in that** it comprises the steps consisting in:

   - measuring in the said layer of water (7) the concentration of dissolved oxygen ($O_2$) of the filtered water;
   - measuring the temperature T in the filtered water;
   - calculating the utilisation efficiency Ct of the oxygen by the said biomass depending on the measured temperature T and the measured concentration of dissolved oxygen ($O_2$);
   - regulating the flow rate of oxygenated gas distributed by the said distribution means depending on the said calculated utilisation efficiency Ct.

3. Process according to claim 2, **characterised in that** it comprises the steps consisting in:

   - fixing a reference flow rate of oxygenated gas $Q_{gas}$ at a given time $t_i$;
   - fixing a reference utilisation efficiency $Ct_{ref}$ of the oxygen by the biomass;
   - measuring at a time $t_n$ the temperature T of the filtered water;
   - measuring at the said time tn the concentration of dissolved oxygen ($O_2$) in the said layer of filtered water;
   - calculating the said utilisation efficiency Ct of the oxygen by the biomass;
   - calculating the necessary flow rate of oxygenated gas $Q_{gas}(t_n)$ at time $t_n$;
   - regulating the flow rate and/or the concentration of the said oxygenated gas distributed by the said distribution means depending on the result obtained.

4. Process according to claim 1, **characterised in that** it comprises the steps consisting in:

- measuring the temperature T of the treated water;
- fixing a reference concentration of dissolved oxygen corresponding to a measured temperature and to a reference utilisation efficiency $Ct_{ref}$;
- measuring the concentration of dissolved oxygen ($O_2$) in the treated water;
- regulating the flow rate and/or the concentration of oxygenated gas distributed by the said distribution means so that the measured concentration of dissolved oxygen corresponds to the reference concentration of dissolved oxygen.

5. Process according to any one of claims 1 to 4,
   **characterised in that** the concentration of dissolved oxygen ($O_2$) is measured in the said layer of water (7) at least at a height H from the upper surface of the said filter bed sufficient to permit the dissolution of the gaseous oxygen leaving the said filter bed so that equilibrium is achieved.

6. Process according to one of claims 1 to 5,
   **characterised in that** the temperature of the treated water is also measured in the said layer of water (7).

7. Process according to any one of claims 1 to 6,
   **characterised in that** the said oxygenated gas is air and **in that** the said utilisation efficiency Ct of the oxygen by the biomass is calculated according to the formula:

$$Ct = [475 - O_2 (33.5 + T)]/[475 - 0.21O_2 \times (33.5 + T)]$$

   in which T is the temperature of the filtered water expressed in °C and $O_2$ is the concentration of dissolved oxygen in the treated water expressed in mg/l.

8. Process according to one of claims 1 to 7,
   **characterised in that** it consist in measuring the amounts of dissolved oxygen at different times $t_i$, $t_{i+1}$, $t_{i+2}$, ... $t_n$, calculating the mean $O_2$ mean of the measured amounts of dissolved oxygen, measuring the temperature of the treated water at different times $t_i$, $t_{i+1}$, $t_{i+2}$, ... $t_n$, calculating the mean $T_{mean}$ of the measured temperatures, and calculating the said utilisation efficiency Ct of the oxygen by the biomass from the values Of $O_2$ mean and $T_{mean}$.

9. Process according to one of claims 1 to 7,
   **characterised in that** it is carried out continuously.

10. Biological filter for treating water, specially designed for the implementation of the process according to one of claims 1 to 9 and comprising:

    - means (5) for introducing water to be filtered, said means being provided in the lower part of the filter,
    - a filter bed (2) serving to support a biomass used to degrade the carbonaceous and/or nitrogenous pollution in the water to be filtered,
    - means (5, 5a) for distributing an oxygenated gas to at least one part of the said filter (2),
    - a layer of filtered water (7) provided above the said filter bed (2), and
    - means (4) for removing filtered water that has flowed through the interior of the filter in an ascending current, provided in the upper part of the filter,

    **characterised in that** it comprises means (10) for measuring the concentration of dissolved oxygen in the said layer of water (7), and **in that** it comprises means (11) for measuring the temperature of the filtered water.

11. Filter according to claim 10, **characterised in that** the said means for measuring the concentration of dissolved oxygen consist of at least one sensor (10) installed in the said layer of water (7) at a height H from the upper surface of the said filter bed, the said height H being greater than the height Hmin, sufficient to enable the dissolution of the gaseous oxygen leaving the said filter bed in the form of bubbles so that equilibrium is achieved.

**Patentansprüche**

1. Verfahren zum Regulieren der Zufuhr an sauerstoffhaltigem Gas in einem biologischen Filter, das folgendes umfasst:

   - Zufuhrmittel (3) für zu filterndes Wasser im unteren Teil des Filters,
   - ein Filterbett (2), das als Unterlage für eine Biomasse dient, die zum Zersetzen der kohlenstoff- und/oder stickstoffhaltigen Verunreinigungen des zu filternden Wassers eingesetzt wird,
   - Verteilungsmittel eines sauerstoffhaltigen Gases (5, 5a) in mindestens einem Teil des Filterbettes (2),
   - eine oberhalb des Filterbettes (2) vorgesehene gefilterte Wasserschicht (7) und,
   - Mittel zum Ableiten (4) des gefilterten Wassers, das aufwärts in das Innere des Filters gelaufen ist, welche im oberen Teil des Filters angebracht sind,

   **dadurch gekennzeichnet, dass** es darin besteht, die Leistung an Sauerstoffverbrauch $C_t$ der Biomasse als Funktion von ausschließlich der Temperaturmessung in der gefilterten Wasserschicht (7) und der Konzentrationsmessungen des darin gelösten Sauerstoffs zu berechnen und den Durchsatz und/oder die Konzentration des sauerstoffhaltigen Gases als Funktion der berechneten Leistung $C_t$ zu regeln.

2. Verfahren nach Anspruch 1, **dadurch gekennzeichnet, dass** es die folgenden Schritte umfasst:

   - Messen der Konzentration an gelöstem Sauerstoff ($O_2$) des gefilterten Wassers in der Wasserschicht (7),
   - Messen der Temperatur T des gefilterten Wassers,
   - Berechnen der Leistung an Sauerstoffverbrauch $C_t$ der Biomasse als Funktion der gemessenen Temperatur T und der Konzentration an gelöstem Sauerstoff ($O_2$),
   - Regeln des Durchsatzes an sauerstoffhaltigem Gas, das von den Verteilungsmitteln verteilt wird, in Abhängigkeit der berechneten Leistung an Sauerstoffverbrauch $C_t$.

3. Verfahren nach Anspruch 2, **dadurch gekennzeichnet, dass** es die folgenden Schritte umfasst:

   - Bestimmen eines Durchsatzes an sauerstoffhaltigem Gases $Q_{gas}$ zu einem gegebenen Zeitpunkt $t_1$,
   - Bestimmen einer Referenzleistung $C_{Tref}$ für den Sauerstoffverbrauch durch die Biomasse;
   - Messen der Temperatur T des gefilterten Wassers zu einem Zeitpunkt $t_n$,
   - Messen der Konzentration an gelöstem Sauerstoff ($O_2$) in der gefilterten Wasserschicht zu diesem Zeitpunkt $t_n$,
   - Berechnen dieser Leistung $C_t$ für den Sauerstoffverbrauch durch die Biomasse,
   - Berechnen des zum Zeitpunkt $t_n$ benötigten Durchsatzes an sauerstoffhaltigem Gas $Q_{gas}(t_n)$,
   - Regeln des Durchsatzes und/oder der Konzentration dieses von den Verteilungsmitteln verteilten sauerstoffhaltigen Gases in Abhängigkeit des erzielten Ergebnisses.

4. Verfahren nach Anspruch 1, **dadurch gekennzeichnet, dass** es die folgenden Schritte umfasst:

   - Messen der Temperatur T des behandelten Wassers,
   - Bestimmen einer Referenzkonzentration an gelöstem Sauerstoff, die einer gemessenen Temperatur und einer Referenz-Verbrauchsleistung $C_{Tref}$ entspricht,
   - Messen der Konzentration des im behandelten Wassers gelösten Sauerstoffs ($O_2$),
   - Regeln des Durchsatzes und/oder der Konzentration des von den Verteilungsmitteln verteilten sauerstoffhaltigen Gases, damit die gemessene Konzentration an gelöstem Sauerstoff der Referenzkonzentration an gelöstem Sauerstoff entspricht.

5. Verfahren nach einem der Ansprüche 1 bis 4, **dadurch gekennzeichnet, dass** die Konzentration an gelöstem Sauerstoff ($O_2$) in der Wasserschicht (7) mindestens in einer Höhe H der oberen Fläche des Filterbettes gemessen wird, die ausreichend sein soll, um die Auflösung des aus dem Filterbett austretenden gasförmigen Sauerstoffes bis zum Erreichen des Gleichgewichtes zu ermöglichen.

6. Verfahren nach einem der Ansprüche 1 bis 5, **dadurch gekennzeichnet, dass** die Temperatur des behandelten Wassers ebenfalls in der Wasserschicht (7) gemessen wird.

7. Verfahren nach einem der Ansprüche 1 bis 6, **dadurch gekennzeichnet, dass** es sich beim sauerstoffhaltigen Gas um Luft handelt und, dass die Leistung $C_t$ für den Sauerstoffverbrauch durch die Biomasse mittels der Formel berechnet wird:

$$C_t = [475 - O_2(33,5 + T)] /[475 - 0,21 \, O_2 \times (33,5 + T)]$$

wobei T die Temperatur des gefilterten Wassers in °C ausgedrückt und $O_2$ die Konzentration an im behandelten Wasser gelöstem Sauerstoff, in mg/l ist.

**8.** Verfahren nach einem der Ansprüche 1 bis 7, **dadurch gekennzeichnet, dass** es im Messen der zu verschiedenen Zeitpunkten $t_i$, $t_{i+1}$, $t_{i+2}$, ...., $t_n$ gelösten Sauerstoffmengen, im Berechnen des Mittelwertes $O_{2 \, moy}$ der gemessenen Mengen an gelöstem Sauerstoff, im Messen der Temperatur des behandelten Wassers zu den verschiedenen Zeitpunkten $t_i$, $t_{i+1}$, $t_{i+2}$, ...., $t_n$, im Berechnen des Mittelwertes $T_{moy}$ der gemessenen Temperaturen und im Berechnen der Leistung $C_t$ an Sauerstoffverbrauch der Biomasse, ausgehend von $O_{2 \, moy}$ und von $T_{moy}$ besteht.

**9.** Verfahren nach einem der Ansprüche 1 bis 7, **dadurch gekennzeichnet, dass** es kontinuierlich angewandt wird.

**10.** Biologisches Filter für die Wasserbehandlung, besonders ausgelegt für die Anwendung des Verfahrens nach einem der Ansprüche 1 bis 9, das folgendes umfasst:

- Zufuhrmittel (5) für zu filterndes Wasser im unteren Teil des Filters,
- ein Filterbett (2), das als Unterlage für eine Biomasse dient, die zum Zersetzen der kohlenstoff- und/oder stickstoffhaltigen Verunreinigungen des zu filternden Wassers eingesetzt wird,
- Verteilungsmittel eines sauerstoffhaltigen Gases (5, 5a) in mindestens einem Teil des Filterbettes (2),
- eine oberhalb des Filterbettes (2) vorgesehene gefilterte Wasserschicht (7) und,
- Mittel zum Ableiten (4) des gefilterten Wassers, das aufwärts in das Innere des Filters gelaufen ist, welche im oberen Teil des Filters angebracht sind,

**dadurch gekennzeichnet, dass** es über Mittel zum Messen (10) der Konzentration an in der Wasserschicht (7) gelöstem Sauerstoff und über Mittel zum Messen der Temperatur des gefilterten Wassers (11) verfügt.

**11.** Filter nach Anspruch 10, **dadurch gekennzeichnet, dass** die Mittel zum Messen der Konzentration des gelösten Sauerstoffs aus mindestens einem Sensor (10) bestehen, der in der Wasserschicht (7) untergebracht ist, in einer Höhe H von der oberen Fläche des Filterbettes, wobei diese Höhe H größer ist als die Höhe $H_{min}$, die ausreicht, um das Lösen des aus dem Filterbett kommenden gasförmigen Sauerstoffes in Form von Blasen bis zum Erreichen des Gleichgewichtes zu gewährleisten.

Fig. 1

INITIALISATION

ACQUISITION O2 DISSOUS ,
T° ( EAU EPUREE ) , CT

CALCUL DU RENDEMENT
D'UTILISATION

$$CT = \frac{475 - O2\ (33,5 + T°)}{475 - 0,21\ O2\ (33,5 + T°)}$$

CALCUL DU DEBIT D'AIR

$$Q\ (t+1) = \frac{Q\ (t)\ \times\ CT}{CT_{ref}}$$

## Fig. 2

O2 dissous en mg/l

Q eau et Q air en m3/h et Nm3/h

temps

——— Q air en Nm3/h   ——— Q eau   --•-- O2 dissous

Fig. 3

Fig. 4

Concentration en ammoniaque (mg/l)

Rendement d'utilisation d'oxygène par la biomasse

temps

— CT calculé avec O2 dissous  — CT calculé avec les besoins en oxygène
— N-NH4 sortie  — N-NH4 entrée

Fig. 5

EP 0 885 639 B1